# EUROPEAN PATENT APPLICATION

(11) **EP 4 675 325 A1**
(43) Date of publication of application: **07.01.2026**
(21) Application number: 25184883.4
(22) Date of filing: 24.06.2025
(51) Int. Cl.: G02B 6/44

(54) **CABLE ENTRY DEVICE AND METHOD OF USE**

(30) Priority: 02.07.2024 US 202463666879 P
(71) Applicant: Corning Research & Development Corporation, Corning, New York 14831 (US)
(72) Inventor: MAGIERA, Andrzej, 98-160 S dziejowice (PL); RUDA, Michal, 95-060 Brzeziny (PL); SWIERCZ, Konrad, 92-447 Lodz (PL)
(74) Representative: Reddie & Grose LLP

(57) **Abstract**

An apparatus for use in connection with an enclosure is provided herein. The apparatus comprises a housing comprising a first portion and a second portion coupled at a base. The first portion comprises a closed surface extending between a first edge and a second edge. The second portion comprises at least one opening extending between a third edge and a fourth edge. Each of the first edge, the second edge, the third edge, and the fourth edge define an edge profile, configured to provide selective (e.g., rotational insertion) coupling with the enclosure for controlling cable entry into the enclosure.

## Description

### PRIORITY APPLICATION

This application claims the benefit of priority of U.S. Provisional Application No. 63/666,879, filed on July 2, 2024, the content of which is relied upon and incorporated herein by reference in its entirety.

### FIELD OF THE INVENTION

Embodiments of the present invention relate generally to enclosures housing fiber optic cables, and more particularly, to entry apparatuses for use within terminal enclosures to provide multiple types of cable entries in a single unit.

### BACKGROUND OF THE INVENTION

Telecommunication cables are used for distributing all manner of data across vast networks. A telecommunication cable typically includes a bundle of individual telecommunication lines (e.g., optical fibers or copper wires) that are encased within a protective sheath. As telecommunication cables are routed across data networks, it is necessary to periodically open the cable so that one or more telecommunication lines therein may be spliced, thereby allowing data to be distributed to other cables or "branches" of the telecommunication network. The cable branches may be further distributed until the network reaches individual homes, businesses, offices, premises, and so on.

To provide improved performance to subscribers, fiber optic networks are increasingly providing optical fiber connectivity directly to the subscribers. As part of various fiber-to-the-premises ("FTTP"), fiber-to-the-home ("FTTH"), and other initiatives (generally described as "FTTx"), such fiber optic networks are providing the optical signals from distribution cables through local convergence points ("LCPs") to fiber optic cables, such as drop cables, that are run directly to the subscribers' premises. Such optical connectivity is increasingly being provided to single family units ("SFU") and to multiple dwelling units ("MDUs") in part because of the relatively large density of subscribers located in an MDU.

MDUs include apartments, condominiums, townhouses, dormitories, hotels/motels, office buildings, factories, and any other collection of subscriber locations that are in relatively close proximity to one another. MDUs typically are all provided in a single indoor environment, such as an office or condominium; however, MDUs may also include a plurality of individual structures, such as apartment complexes. Typically, if an MDU comprises multiple structures, the optical fibers extending between the structures are adapted for outdoor environments, whereas the optical fibers extending within the structures are adapted for indoor environments. Most conventional MDUs include an LCP located in a generally central and selectively accessible location, such as the basement, utility closet, or the like, or the LCP may be located outside the MDU on an exterior wall, in a pedestal, in a handhole, or the like. The LCP includes at least one fiber optic cable that optically connects to a distribution cable. The LCP also includes a connection point where the subscriber cables routed through the building are optically connected to the distribution cable.

Conventional LCPs for such MDUs are generally sized according to the number of subscribers to be serviced through the LCP, and many of the high density MDUs require large, expensive LCPs that may be difficult to install and/or transport. In addition, conventional LCPs often require skilled technicians to install the LCP and route the associated subscriber cables. Furthermore, highly skilled technicians are required to optically connect, often by splicing, the distribution cable to the LCP and to optically connect and route the subscriber cables to the LCP. Therefore, a need exists for LCPs that are cost-effective, are relatively small in size, and may be installed and maintained by relatively unskilled technicians.

In a number of MDUs there may be a need to use and service multiple different types of optical connections, for example, adapter plugs, direct access, etc. In general, these different capabilities require different apparatuses, and may define different sizing characteristics. Thus, there exists a need to develop an apparatus which provides multiple entry configurations while providing uniform characteristics to be used and implemented in existing MDU's.

### BRIEF SUMMARY OF THE INVENTION

Various embodiments of the present invention address the above needs and achieve other advantages by providing an apparatus for use in connection with an enclosure which provides multiple cable entry configurations for different types of cable entries.

The apparatus may be positioned (e.g., selectively installed at different positions and/or orientations relative to the enclosure) in a receiving opening of the enclosure and may be rotatable in 90 degree increments, with the increments providing different cable entry types. The apparatus may define a first position defining a dummy plug such that the dummy plug blocks access between the outside of the enclosure and the inside of the enclosure. The apparatus may define a second position which provides direct access for a cable or tube entry between the outside of the enclosure and the inside of the enclosure. The apparatus may define a third position which may be configured as a connector patch panel such as subscriber connector (SC) or lucent connector (LC) duplex patch panel. For each of these positions, the apparatus may be removed, rotated, and replaced to change the functionality of the apparatus.

In an example embodiment an apparatus for use in connection with an enclosure defining a receiving opening for one or more cables to enter the enclosure is provided. The apparatus comprises a housing comprising a first portion and a second portion coupled at a base. The first portion comprises a closed surface extending between a first edge and a second edge. The second portion comprises at least one opening extending between a third edge and a fourth edge. Each of the first edge, the second edge, the third edge, and the fourth edge define an edge profile. The apparatus further comprises an insert positioned between the first portion and the second portion. The insert defines a cut leading from a first side to a second side of the insert for receiving a cable therethrough. The edge profile is configured to provide selective coupling within the receiving opening of the enclosure such that one of the closed surface, the at least one opening or the first side or the second side of the insert faces outwardly from the enclosure.

In some embodiments, the housing defines rotational symmetry among the edge profiles of the first edge, the second edge, the third edge, and the fourth edge. In some embodiments, the rotational symmetry allows the apparatus to be removed from the opening, rotated in 90 degree increments and replaced within the opening of the enclosure.

In some embodiments, the second portion is configured to receive at least one adapter within the at least one opening. In some embodiments, the second portion comprises at least one rung, which partially bounds the at least one opening. In some embodiments, the base comprises a fracture line extending between the first portion and the second portion. In some embodiments, the at least one opening comprises three openings, each of the three openings being configured to receive an adapter for connecting one or more cables.

In some embodiments, the insert comprises one or more circular indicators from indicating positional placement for a cable. In some embodiments, the insert is an elastic foam.

In another example embodiment a system for cable management is provided. The system comprises an enclosure defining a base portion comprising a first wall, a second wall, a third wall, and a fourth wall. At least one of the first wall, the second wall, the third wall, or the fourth wall defines at least one receiving opening for providing access for one or more cables to enter the enclosure. The receiving opening comprises at least a first rail and a second rail. The system further comprises an apparatus removably engageable with the first rail and the second rail. The apparatus comprises a housing comprising a first portion and a second portion coupled at a base. The first portion comprises a closed surface extending between a first edge and a second edge. The second portion comprises at least one opening extending between a third edge and a fourth edge. Each of the first edge, the second edge, the third edge, and the fourth edge define an edge profile. The apparatus further comprises an insert positioned between the first portion and the second portion. The insert defines a cut leading from a first side to a second side of the insert for receiving a cable therethrough. The edge profile is configured to provide selective coupling within the receiving opening of the enclosure such that one of the closed surface, the at least one opening or the first side or the second side of the insert faces outwardly from the enclosure.

In some embodiments, the at least one receiving opening defines a first engagement area, a second engagement area, a third engagement area, and a fourth engagement area. In a first position the first edge of the apparatus engages with the first engagement area, the second edge engages with the second engagement area, the third edge engages with the third engagement area, and the fourth edge engages with the fourth engagement area.
In some embodiments, the housing of the apparatus defines rotational symmetry among the edge profiles of the first edge, the second edge, the third edge, and the fourth edge, such that the apparatus is removable from the receiving opening in the first position and rotatable in 90 degree increments such that the first edge engages with one of the first engagement area, the second engagement area, the third engagement area or the fourth engagement area, the second edge engages with one of the first engagement area, the second engagement area, the third engagement area or the fourth engagement area, the third edge engages with one of the first engagement area, the second engagement area, the third engagement area or the fourth engagement area, and the fourth edge engages with one of the first engagement area, the second engagement area, the third engagement area or the fourth engagement area.

In some embodiments, the second portion is configured to receive at least one adapter within the opening. In some embodiments, the second portion comprises at least one rung which partially bounds the at least one opening. In some embodiments, the base comprises a fracture line extending between the first portion and the second portion. In some embodiments, the at least one opening comprises three openings, each of the three openings being configured to receive an adapter for connecting one or more cables.

In some embodiments, the insert comprises one or more circular indicators from indicating positional placement for a cable. In some embodiments, the insert is an elastic foam.

In some embodiments, each of the geometric profile and the edge profiles are formed of right angles.

In another example embodiment, a method of installing a cable in an enclosure is provided. The method comprises removing an apparatus from the enclosure. The apparatus comprises a housing comprising a first portion and a second portion coupled at a base. The first portion comprises a closed surface extending between a first edge and a second edge. The second portion comprises at least one opening extending between a third edge and a fourth edge. Each of the first edge, the second edge, the third edge, and the fourth edge define an edge profile. The apparatus further comprises an insert positioned between the first portion and the second portion. The method further comprises installing a cable into the insert. The method further comprises rotating the apparatus to a desired orientation and repositioning the apparatus in the enclosure such that the cable passes into the enclosure through the insert.

In some embodiments, installing the cable comprises pushing the cable into the insert from a top side of the insert.

In yet another example embodiment a method of installing a cable in an enclosure is provided. The method comprises removing an apparatus from the enclosure. The apparatus comprises a housing comprising a first portion and a second portion coupled at a base. The first portion comprises a closed surface extending between a first edge and a second edge. The second portion comprises at least one opening extending between a third edge and a fourth edge. Each of the first edge, the second edge, the third edge, and the fourth edge define an edge profile. The apparatus further comprises an insert positioned between the first portion and the second portion. The method further comprises positioning at least one adapter into the at least one opening of the second portion. The method further comprises connecting at least one cable to an inlet of the adapter, and connecting at least one cable to an outlet of the adapter. The method further comprises rotating the apparatus to a desired orientation and repositioning the apparatus in the enclosure such that the adapter faces outwardly from the enclosure.

In some embodiments, the housing further comprises a fracture line extending between the first portion and the second portion. The method further comprises separating, at the fracture line, the first portion and the second portion of the housing. In some embodiments, the apparatus further comprises an insert positioned between the first portion and the second portion, and the method further comprises removing the insert from the apparatus.

### BRIEF DESCRIPTION OF THE DRAWINGS

Having thus described the invention in general terms, reference will now be made to the accompanying drawings, which are not necessarily drawn to scale, and wherein:
FIG. 1 illustrates a schematic diagram of an exemplary FTTx network, in accordance with some embodiments discussed herein;
FIG. 2 illustrates an example convergence point enclosure (e.g., a fiber optic patch enclosure) in a closed state, in accordance with some embodiments discussed herein;
FIG. 3 illustrates a perspective view of a base of an enclosure comprising multiple apparatuses in differing configurations, in accordance with some embodiments discussed herein;
FIG. 4A illustrates a perspective view of a housing of an example apparatus, in accordance with some embodiments discussed herein;
FIG. 4B illustrates a perspective view of the example apparatus, in accordance with some embodiments discussed herein;
FIG. 4C illustrates another perspective view of the example apparatus, in accordance with some embodiments discussed herein;
FIG. 4D illustrates a perspective view of a second portion of the housing of the apparatus, in accordance with some embodiments discussed herein;
FIG. 5 illustrates a perspective view of the second portion of the housing with example adaptors, in accordance with some embodiments discussed herein;
FIG. 6 illustrates an enhanced, perspective view of a receiving section of the enclosure, illustrated in FIG. 3, in accordance with some embodiments discussed herein; and
FIGS. 7-8 illustrate block diagrams of example methods in accordance with some embodiments discussed herein.

### DETAILED DESCRIPTION

Example embodiments of the present invention now will be described more fully hereinafter with reference to the accompanying drawings, in which some, but not all embodiments of the invention are shown. Indeed, the invention may be embodied in many different forms and should not be construed as limited to the example embodiments set forth herein; rather, these embodiments are provided so that this disclosure will satisfy applicable legal requirements. Like reference numerals refer to like elements throughout.

The term "Outside Plant" ("OSP") as used herein is defined as the cables or providers prior to the cables being spliced in a fiber optic patch enclosure. The term "inside plant" ("ISP") as used herein is defined as the point at which the cables are being spliced and redirected to the consumer.

The term "vertical" as used herein may refer to generally up and down (e.g., perpendicular) with respect to a plane corresponding to the base of the enclosure. The term "horizontal" as used herein may refer to generally left, right, forward, and backward (e.g., parallel) with respect to a plane corresponding to the base of the enclosure. To the extent a specific direction (e.g., up, down, side, etc.) is used, such terms are meant for explanatory purposes and are not designed to be limited to the specifically termed direction. In this regard, other directions are contemplated, such as based on different frames of reference.

Optical fibers are useful in a wide variety of applications, including the telecommunications industry for voice, video, and data transmissions. The benefits of optical fibers are well known and include higher signal-to-noise ratios and increased bandwidth compared to conventional copper-based transmission technologies. To meet modern demands for increased bandwidth and improved performance, telecommunication networks are increasingly providing optical fiber connectivity closer to end subscribers. These initiatives include fiber-to-the-node (FTTN), fiber-to-the-premises (FTTP), fiber-to-the-home (FTTH), and the like (generally described as FTTx).

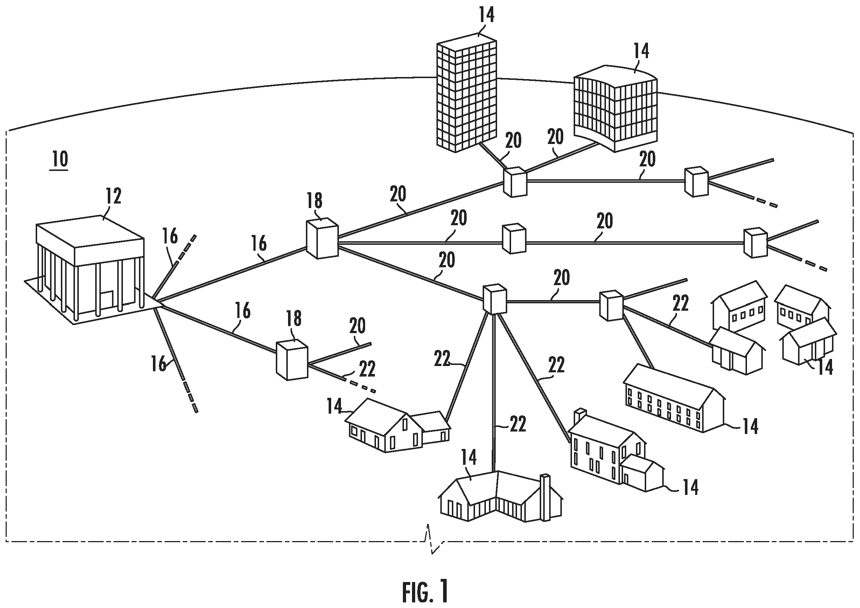

In an FTTx network, fiber optic cables are used to carry optical signals to various distribution points and, in some cases, all the way to end subscribers. For example, FIG. 1 is a schematic diagram of an exemplary FTTx network 10 that distributes optical signals generated at a switching point 12 (e.g., a central office of a network provider) to subscriber premises 14. Optical line terminals (OLTs; not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points closer to the subscriber premises 14, some or all of the optical fibers in the distribution cables 20 may be accessed to connect to one or more subscriber premises 14. Drop cables 22 extend from the network access points to the subscriber premises 14, which may be single-dwelling units (SDU), multi-dwelling units (MDU), businesses, and/or other facilities or buildings. A conversion of optical signals back to electrical signals may occur at the network access points or at the subscriber premises 14.

There are many different network architectures, and the various tasks required to distribute optical signals (e.g., splitting, splicing, routing, connecting subscribers) can occur at several locations. Regardless of whether a location is considered a switching point, local convergence point, network access point, subscriber premise, or something else, fiber optic equipment is used to house components that carry out one or more of the tasks. The fiber optic equipment may be assemblies that include drawers or trays to facilitate the tasks.

Although an FTTx network 10 is shown in FIG. 1, the same considerations apply with respect to other types of telecommunication networks or environments, such data centers and other enterprise network environments. Like switching points (central offices), data centers may include fiber optic equipment having drawers or trays. In some cases, subscriber premises 14 may have one or more SDUs or MDUs having drawers, trays, or modules (and fiber optic patch enclosures that house such drawers, trays, or modules).

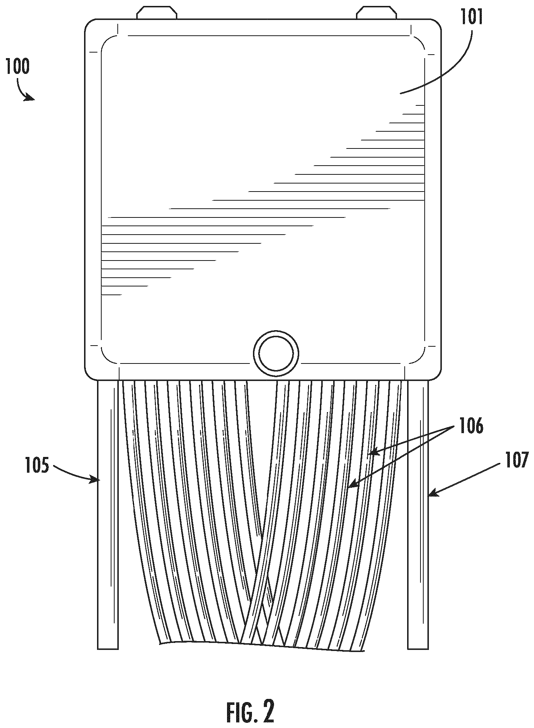

A patch enclosure for MDUs and/or various SFUs may bring in one or more cables and distribute the cables throughout the MDUs and/or SFUs. An example enclosure 100 housing one or more splice trays is illustrated in FIG. 2. In some embodiments, the enclosure 100 may have an inlet for incoming cable 105, and an outlet for the at least one drop cable 106. In some embodiments, the enclosure may also have an outlet, for an outgoing cable 107. The outgoing cable 107 may continue to another enclosure for a room, dwelling, or other premise. The enclosure 100 may be substantially symmetrical, providing an opening for an incoming cable or outgoing cable on both a first side and a second side of the enclosure.

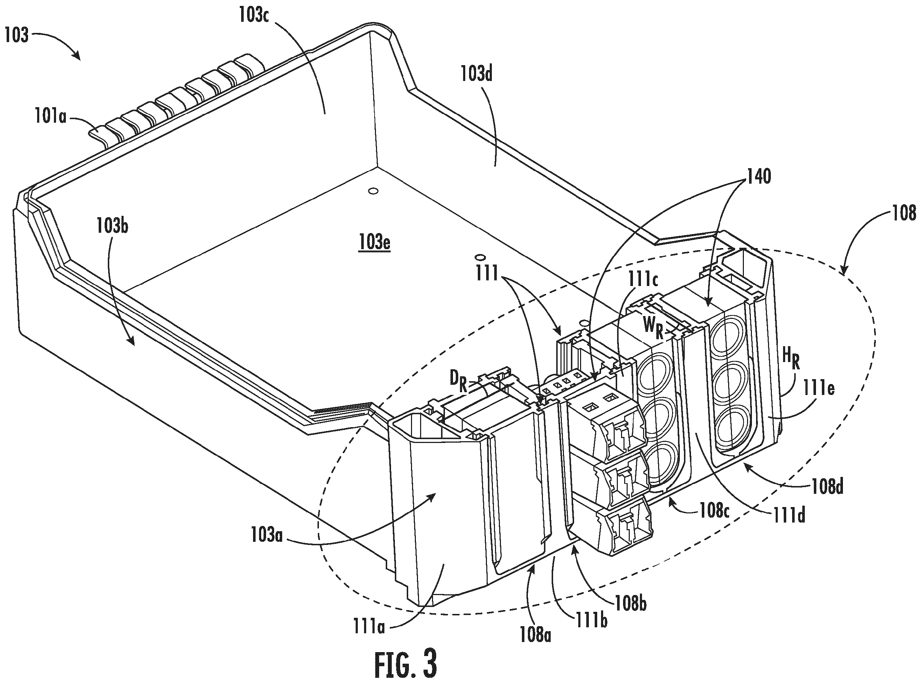

FIG. 3 illustrates a base 103 of the enclosure 100 (e.g., in an open state). In the open state, a lid 101 (shown in FIG. 2) may be substantially disengaged from the base 103. The lid 101 and the base 103 may be hingedly attached, such as via hinges 101a, so as to rotate about a hinge between an open state and a closed state. As used herein, the closed state refers to the lid 101 and the base 103 being fully engaged, and the open state refers to any state other than the closed state. In other embodiments, the lid 101 and base 103 may be configured to have a snap together feature, or other means of one component receiving or inserting into the other (skirt, snap, etc.).

The base 103 may be shaped to receive and organize cables, splice trays, and other features. In some embodiments, the base 103 comprises a first wall 103a, a second wall 103b, a third wall 103c, and a fourth wall 103d extending upwardly from a base bottom 103e. In some embodiments, the first wall 103a may be parallel to the third wall 103c and may be perpendicular to the second wall 103b, and the fourth wall 103d. In some embodiments, the base 103 may be a square, while in other embodiments, the base 103 may be a rectangle, although other configurations are additionally considered.

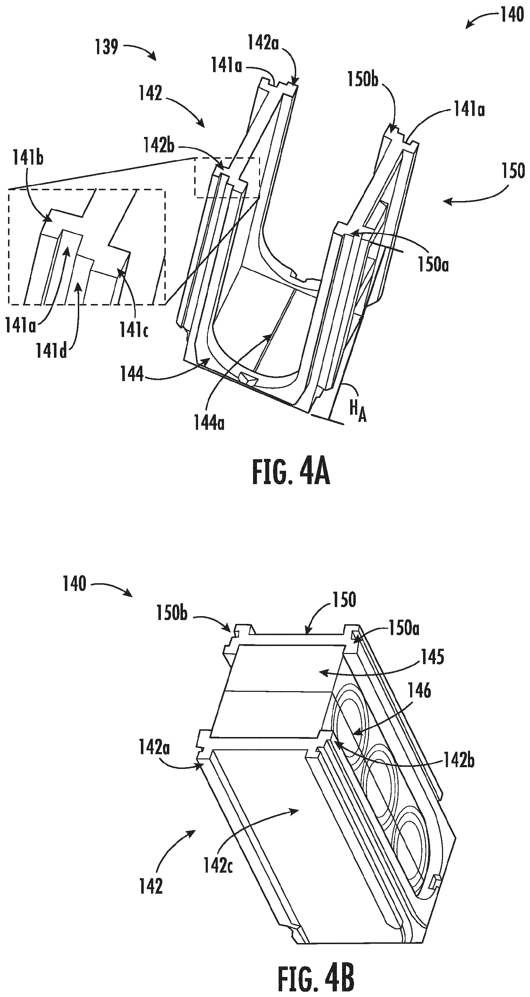

In some embodiments, the first wall 103a comprises a receiving section 108 comprising one or more receiving openings 108a-108d. The receiving section 108 may comprise a plurality of rails 111 configured to receive one or more apparatuses 140 therebetween. Each of the plurality of rails 111 defines a rail height H_{R} extending upward from the base bottom 103e. The rail height H_{R} may correspond to an apparatus height H_{A} (shown in FIG. 4A) such that top of each of the plurality of rails 111 and the apparatus 140 are flush. The uniformity in the height of the plurality of rails and the apparatuses provides an adequate seal to prevent dust, debris and other undesirable objects from entering into the enclosure 100, when the enclosure is in the closed position.

Each of the plurality of rails 111 defines a rail width W_{R} which extends from the first wall 103a into the base 103 of the enclosure. Additionally, the plurality of rails 111 define a rail distance D_{R} which extends between adjacent rails of the plurality of rails 111. In some embodiments, the rail distance D_{R} and the rail width W_{R} may be the same. In this regard, the rail distance D_{R} and the rail width W_{R} are configured to receive a square apparatus (taken along a horizontal cross-section of the apparatus for example). In other embodiments, the rail distance D_{R} and the rail width W_{R} may be different, however, the discrepancy in sizing may limit the selective rotatability positioning of the apparatus, thus, limiting the number of entries available for each apparatus.

In some embodiments, the plurality of rails 111 positioned within the receiving section 108 extend along the first wall 103a between the second wall 103b and the fourth wall 103d. The plurality of rails 111 comprises a number of rails extending upward from the base bottom 103e. Each of the plurality of rails 111 may be positioned a rail distance D_{R} apart. In some embodiments, the rail distance D_{R} between each of the plurality of rails 111 is the same as the rail width W_{R}. As discussed, the uniform size of the rail distance D_{R} and the rail width W_{R}, in addition to the shape of the plurality of rails 111 allows the plurality of rails 111 to receive a square, or mostly square-shaped apparatus, such that the apparatus 140 may be positioned in various orientations between the plurality of rails. Although, a square configuration is discussed, other configurations are considered.

As will be discussed further herein, each of the plurality of rails 111 define a rail profile which is geometric, such as to receive a corresponding portion of the apparatus 140. As used herein, "geometric" profile refers to the edge configuration of each of the plurality of rails, the geometric profile includes edge length, angles, and configuration of the plurality of rails.

In some embodiments, each receiving opening 108a-108d is configured to receive a corresponding apparatus 140. In this regard, as shown in FIG. 3, the plurality of rails 111 may comprise five rails, defining the four receiving openings 108a-108d therebetween (although any number of receiving openings is contemplated). In the illustrated embodiment, a first rail 111a is formed at the junction of the first wall 103a and the second wall 103b, a fifth rail 111e is at the junction of the first wall 103a and the fourth wall 103d, and there are three free standing rails 111b, 111c, 111d extending upward from the base bottom 103e therebetween. Thus, a first receiving opening 108a is bound by the first rail 111a and a second rail 111b, a second receiving opening 108b is bound by the second rail 111b and a third rail 111c, a third receiving opening 108c is bound by the third rail 111c and a fourth rail 111d, and a fourth receiving opening 108d is bound by the fourth rail 111d and the fifth rail 111e. Notably, the receiving openings provide access for one or more cables to enter or leave the enclosure 100 (even when enclosure 100 is in the closed state).

FIGs. 4A-4D illustrate various views of the apparatus 140 in the different positions as shown and described above. FIG. 4A illustrates a housing 139 of the apparatus 140 comprising a first portion 142 and a second portion 150. The first portion 142 and the second portion 150 are connected at a base 144, which defines a fracture line 144a extending therethrough. In some embodiments, the housing 139 may be formed of a plastic material, for example a polyethylene, polyethylene terephthalate, polypropylene or similar.

The first portion 142 comprises a first edge 142a and a second edge 142b opposite the first edge 142a. Each of the first edge 142a and the second edge 142b define an edge profile configured to engage with the rails (e.g., 111) of the enclosure.

The first portion 142 of the housing 139 defines a closed surface 142c (FIG. 4B) extending between the first edge 142a and the second edge 142b. As discussed herein, when placed in certain orientations within the enclosure 100, the closed surface 142c may provide a dummy plug to prevent unwanted access into the interior of the enclosure 100. In some embodiments, each of the housings 139 may be provided within the enclosure with the first portion 142 being the external face, such that the closed surface faces outwardly from the enclosure to thereby prevent undesired access into the enclosure 100.

The second portion 150 of the housing 139 comprises a third edge 150a and a fourth edge 150b opposite the third edge 150a. The third edge 150a may be opposite the second edge 142b of the first portion 142 and the fourth edge 150b may be opposite the first edge 142a of the first portion 142.

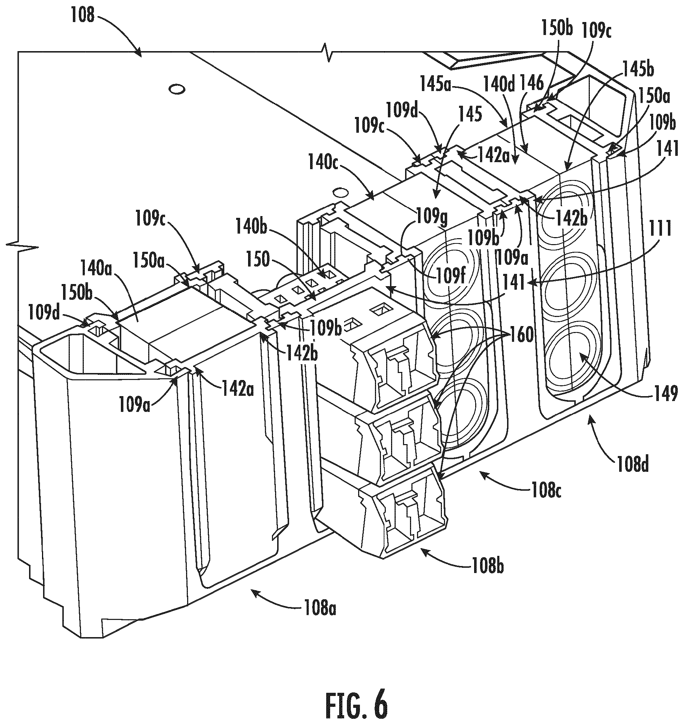

In some embodiments, each of the first edge 142a, the second edge 142b, the third edge 150a and the fourth edge 150b define an edge profile comprising a recess 141a, an outer protrusion 141b, and an inner protrusion 141c. The edge profile is countered to accommodate the engagement areas (e.g., 109a-109d) of the enclosure. For example, the recess 141a of each edge 142a, 142b, 150a, 150b may be secured onto either a side protrusion (see e.g., 109f FIG. 6) or a second protrusion (see e.g., 109g FIG. 6) of the rail. In this regard, the edge profile of each of the first edge 142a, the second edge 142b, the third edge 150a, and the fourth edge 150b are able to engage with each of the engagement areas (e.g., 109a-109d) of a receiving area 108. Said differently, the contour of the edge profile provides multiple engagement points between the edges 142a, 142b, 150a, 150b, and the engagement areas 109a-109d of the rails. To accommodate the multiple configurations of the assembly 140 the edge profile of each of the edges may comprise multiple 90 degree angles and may define a shape which is complimentary to the rails 111, specifically the engagement areas 109a-109d of the rails. In this regard, each of the geometric profile of the rails and the edge profile of the edges may be formed of right angles in complimentary patterns.

As illustrated in FIG. 4A, the outer protrusion 141b may be on the outer side of the recess 141a (i.e., positioned away from the fracture line 144a) and the inner protrusion 141c may be positioned on inner side of the recess 141a (i.e., positioned towards the fracture line 144a). In some embodiments, the inner protrusion 141c may include a step 141d positioned between the inner protrusion 141c and the recess 141a. Each of the outer protrusion 141b, the recess 141a, the inner protrusion 141c, and the step 141d may be formed with 90 degree angles relative to one another. Stated another way, the edge profile (e.g., the outer protrusion 141b, the recess 141a, the inner protrusion 141c, and the step 141d) of each of the edges 142a, 142b, 150a, and 150b have corresponding shapes that enable the engagement with areas 109a-109d in various configurations (i.e., after rotation) as discussed herein.

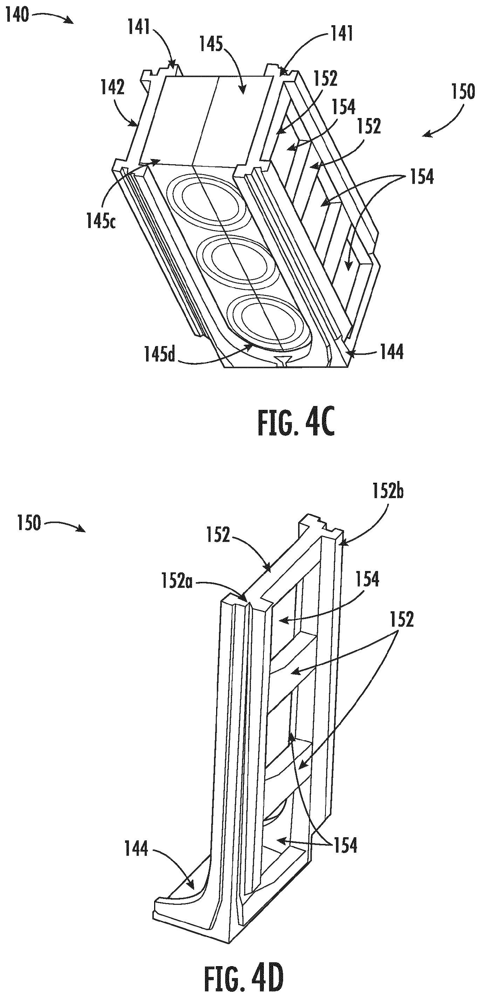

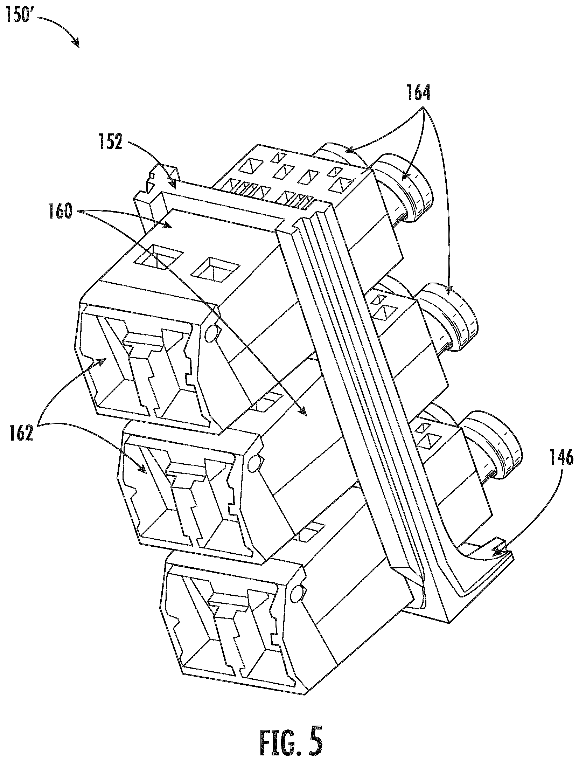

With reference to FIGs. 4C, 4D, and 5, the second portion 150 defines a plurality of openings 154 divided by at least one rung 152 extending between the third edge 150a and the fourth edge 150b. Each of the plurality of openings 154 are configured to receive an adapter 160 which converts incoming cables 162 into internal cables 164. In some embodiments, the openings 154 may be sized to receive the adapters. In this regard, the distance between adjacent rungs 152 may be the same size as the adapter 160, so the adapter 160 may engage in a friction fit, press fit, snap fit or similar with the at least one rung 152.

In some embodiments, the second portion 150 may comprise one opening 154 configured to receive one adapter, while in other embodiments the second portion 150 may comprise multiple openings 154 each configured to receive an adapter 160. In some embodiments, each of the plurality of openings 154 may be the same size so as to receive the same size adapter, while in other embodiments the plurality of openings may define varying sizes so as to receive adapters of varying sizes. For example, a first opening may be larger than a second opening, and in this regard, a first adapter, received by the first opening may be larger than a second adapter received by the second opening.

Referring to FIGs. 4A-4D and FIG. 6, in order to provide access between the interior of the enclosure 100 and the exterior of the enclosure in the different forms, the apparatus 140 comprises rotational symmetry along the edges 141 and through the edge profile of the edges 141. As used herein, "rotational symmetry" refers to the apparatus's 140 ability to rotate in 90 degree increments, when removed from, and replaced within the enclosure, such that the edge profile of each of the edges is engageable with each of the engagement areas (i.e., 109a-109d) of the enclosure.

For example, with reference to FIG. 6, in a first orientation, illustrated by the first apparatus 140a, the first edge 142a may be engaged with a first engagement area 109a, the second edge 142b may be engaged with a second engagement area 109b, the third edge 150a may engage a third engagement area 109c, and the fourth edge 150b may engage a fourth engagement area 109d when initially positioned within the enclosure 100. The apparatus 140 may be removed by sliding apparatus 140 out of the enclosure 100 and rotated, for example in increments of 90 degrees, such that the first edge 142a engages the second engagement area 109b, third engagement area 109c, or fourth engagement area 109d, the second edge 142b engages the third engagement area 109c, the fourth engagement area 109d, or the first engagement area 109a, the third edge 150a engages the fourth engagement area 109d, the first engagement area 109b, or the second engagement area 109b, and the fourth edge 150b engages the first engagement area 109b, the second engagement area 109b, or the third engagement area 109c. Stated another way, the edge profile (e.g., the outer protrusion 141b, the recess 141a, the inner protrusion 141c, and the step 141d) of each of the edges 142a, 142b, 150a, and 150b have corresponding shapes that enable the engagement with areas 109a-109d in various configurations (i.e., after rotation) as discussed herein.

In this regard, in a first position, illustrated by the first apparatus 140a the recesses 141a of each of the edges of the apparatus 140a are engaged with the side protrusion 109f of each of the first engagement area 109a, the second engagement area 109b, the third engagement area 109c, and the fourth engagement area 109d. Similarly, when the first portion 142 of the first apparatus 140a is removed, a second apparatus 140b is formed. The second apparatus 140b may be rotated 180 degrees from the first apparatus 140a, such that the second portion faces outwardly from the enclosure 100. In this engagement position the recesses 141 of the third edge 150a and the fourth edge 150b are engaged with the side protrusion 109b of the first engagement area 109a and the second engagement area 109b.

In other embodiments, for example, for direct connection, the apparatus may be rotated 90 degrees from the first apparatus 140a illustrated by each of the third apparatus 140c and the fourth apparatus 140d such that either a first side 145a or a second side 145b of the insert 145 faces outwardly from the enclosure 100. In this orientation rather than the recess 141a engaging with the side protrusion 109g, the recesses 141a of each of the edges of the apparatus 140c, 140d engaged with the second protrusion 109g of the first engagement area 109a, the second engagement area 109b, the third engagement area 109c, and the fourth engagement area 109d.

Thus, when the apparatus is removed, rotated and reinserted in increments of 90 degrees in either direction (e.g., clockwise or counterclockwise) the apparatus 140 disengages from and reengages to the rails 111 of the enclosure without further adaptation. In this regard, the rails 111 of the receiving section 108 and the edge profile of each of the edges 141 may be complimentary. Notably, each edge 141 may engage with each engagement portion of the rail 111.

As illustrated in FIG. 5, in some embodiments, the second portion 150 comprises three rungs 152 and receives three adapters 160. In some embodiments, the number of rungs 152 and adapters 160 is dependent on the apparatus height (see H_{A} FIG. 3). Notably, the number of rungs 152, and size may correspond to the height of the enclosure.

In some embodiments, the second portion 150 may comprise at least one opening 154 and a solid portion, similar to the closed surface 142c of the first portion 142. The solid portion may provide similar attributes as the closed surface 142c, for example, preventing dust, and debris. In some embodiments, the solid portion may be a rung 152 with a greater thickness, while in other embodiments the solid portion may be a removable portion bound by two rungs, which may be removed to receive an adapter 160.

Returning to FIG. 4A, in some embodiments, the first edge 142a and the second edge 142b are symmetrical across a plane perpendicular to the fracture line 144a. Similarly, the third edge 150a and the fourth edge 150b may be symmetrical over the plane perpendicular to the fracture line 144a. In some embodiments, the first edge 142a may be symmetrical to the fourth edge 150b over a plane parallel to the fracture line 144a, and similarly, the second edge 142b and the third edge 150a may be symmetrical over the plane parallel to the fracture line 144a.

The first portion 142 and the second portion 150 may be connected at the base 144 by the fracture line 144a, or an otherwise weakened portion. The fracture line 144a may be a frangible portion such that when the housing 139 is bent, the first portion 142 and the second portion 150 are configured to separate. The separation of the first portion 142 and the second portion 150 may provide access to the interior of the enclosure, for example, via adapters 160, when the second portion 150 is positioned to face the external surface of the enclosure.

In some embodiments, a direct connection between the exterior of the enclosure 100 and the interior of the enclosure 100 may be desired. To accommodate the direct connection, as illustrated in FIGs. 4B-C, an insert 145 may be positioned within the housing 139. The insert 145 may comprise a cut line 146 extending between a top portion 145c of the insert 145 to a bottom portion 145d of the insert 145. Alternatively, the insert 145 may comprise one or more channels extending through the insert 145, or other mechanism of positioning an optical fiber/cable through the insert 145, such that the insert 145 maintains the position of the fiber within the insert 145.

In some embodiments, the insert 145 may comprise a foam, for example a plastic foam, or otherwise elastic foam. The insert 145 may be moderately elastic such that when a cable is positioned into the cut line 146, the insert 145 maintains the height of the cable at entry. In other embodiments, the insert 145 may not include a cut line 146 extending therethrough.

Apparatuses are positioned in different orientations within the plurality of rails 111 to achieve different cable entry configurations. FIG. 6 illustrates three apparatuses 140a-140c positioned in different orientations with the first wall of the base. Each of the apparatuses 140 comprise up to four edges 141 which define an edge profile complimentary to and receivable by the plurality of rails 111. In some embodiments, the apparatus comprises four edges 141, (see e.g., 140a, 140c) while in other embodiments, the apparatus comprises two edges 141 (see e.g., 140b).

In some embodiments, each of receiving openings 108a-108d may define four engagement areas 109a-109d, each with the geometric profile, in the illustrated embodiment the four engagement areas 109a-109d help define the receiving opening 108b. The geometric profile of the rails 111 may be complimentary to an edge profile of an edge (see 141 FIG. 6of the apparatus 140. In this regard, the complimentary profile may be reciprocal with different portions of the apparatus 140 and edges 141 which will be discussed herein, which provides for the varying orientations of the apparatus 140 between the rails 111. In some embodiments, each of the geometric profile and the edge profile may comprise 90 degree angles.

In some embodiments, illustrated in FIG. 6, each of the engagement areas 109a-109d include a side protrusion 109f extending parallel to the first wall 103a of the base, and a second protrusion 109g extending perpendicular to the side protrusion 109f. The multiple protrusions may be used to secure the apparatus 140 in varying orientations as will be discussed herein.

An apparatus 140c with four edges 141 may be used for direct cable access, or when an insert 145 is supported by within the apparatus 140c. An apparatus 140b with two edges 141 may be used when an adaptor 160 is positioned within the apparatus 140b to connect incoming optical fibers to optical fibers contained within the enclosure. An apparatus 140a may comprise two or four edges, when the apparatus 140a is used as a dummy plug to prevent unauthorized or unwanted access into the enclosure 100.

In some embodiments, an apparatus 140 having four edges, and secured to the plurality of rails 111 at four positions (engagement areas 109a-109d) may be sturdier than those with two edges. In contrast, an apparatus 140 having two edges secured to the plurality of rails 111 may provide a larger entry area into the enclosure and allow other components to be positioned within the apparatus 140.

Each apparatus 140 is removably engageable with the plurality of rails 111. For example, the apparatus 140 may be positioned between the plurality of rails 111 by sliding the apparatus 140 such that the edges 141 engage the plurality of rails 111. In some embodiments, the apparatus 140 enters at a top of the rails 111, and slides along the rails 111 until a base 144 (FIG. 4A) abuts the bottom base 103e. In other embodiments, the apparatus 140 may define a friction fit, a press fit, a snap fit, or similar engagement mechanism with the plurality of rails.

The apparatus 140 may be positioned in different orientations to provide different types of connections between the exterior and interior of the enclosure 100. As illustrated in FIG. 6, the first apparatus 140a may define a first position/orientation within the first receiving opening 108a, such that the apparatus 140a is positioned with a first portion 142 facing external to the enclosure. The first portion 142 may comprise a closed surface (see e.g., 142c of FIG. 4B) (e.g., forming a solid face), thereby preventing access to the enclosure when the enclosure is in the closed position.

In some embodiments, the first apparatus 140a may engage four edges with four rail portions 109a-109d, as illustrated. However, in some embodiments, the first apparatus 140a may utilize only the front two edges, one either side of the solid face (which may occur if a fracture line 144a, such as described herein, is broken).

In some embodiments, the first apparatus 140a may accordingly function as a dummy plug, which may be useful when a cable or other adapter is unnecessary at the position of the apparatus 140. In such a position, the solid face 142c prevents dust, debris, or other unwanted elements from entering into the enclosure.

Shown in a second position/orientation, the second apparatus 140b may be positioned with a second portion 150 facing external to the enclosure. The second position 150 may include one or more adapters 160 positioned through an opening 154 (FIG. 4C) formed within apparatus 140. The adapter 160 provides electrical communication and transformation between inlet optical fibers, and internal optical fibers. In some embodiments, to provide the requisite connections via the one or more adapter 160, the first portion 142 may be removed prior to inserting the one or more adapter 160 and/or prior to insertion of the apparatus 140 between the rails 111. Notably, removing the first portion 142 as illustrated, provides additional space to receive the adapter 160 and allows connections to be unobstructed. Such removal, for example, may be accomplished by disconnecting the first portion 142 from the second portion 150 via a fracture line 144a (see e.g., FIG. 4A).

Shown in a third position/orientation, the third apparatus 140c includes an insert 145 positioned between the first portion 142 and the second portion 150. The third position provides direct access between the interior of the enclosure and the exterior of the enclosure through a cut line 146 formed in the insert 145 extending from a first side 145a to a second side 145b of the insert 145. Notably, as illustrated, the insert 145 includes one or more circular indicators 149 for indicating a positional placement for a cable along the cut line 146.

Each of the apparatuses 140a-c may initially be oriented in the first position in the enclosure, and may be removed, rotated and replaced into the enclosure when access is needed. In some embodiments, the second position (e.g., the second apparatus 140b) is a 180 degree rotation from the first position (e.g., the first apparatus 140a), or a 90 degree rotation from the third position (e.g., the third apparatus 140c). The third position is achieved through a 90 degree rotation from either the first position or the second position.

### Example Flowchart(s) and Operations

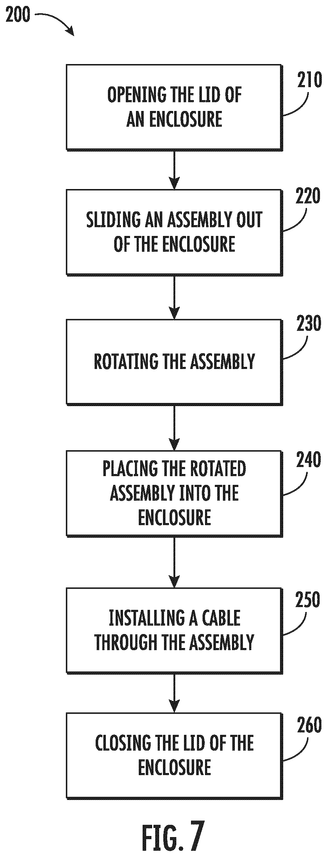

Various examples of the operations performed in accordance with embodiments of the present invention will now be provided with reference to FIGS. 7-8.

FIG. 7 is a flowchart illustrating an example method 200 of installing a cable into an enclosure, in accordance with some embodiments discussed herein. At operation 210, the lid 101 on an enclosure 100 is opened. At operation, the assembly (e.g., apparatus 140) is slid out of the enclosure 100. At operation 230, the assembly (e.g., apparatus 140) is rotated. At operation 240, the rotated assembly (e.g., apparatus 140) is placed back into the enclosure 100, such as with the insert 145 facing external to the enclosure 100. At operation 250, a cable is installed through the insert 145, such as along the cut line 146. At operation 640, the lid 101 of the enclosure 100 is closed.

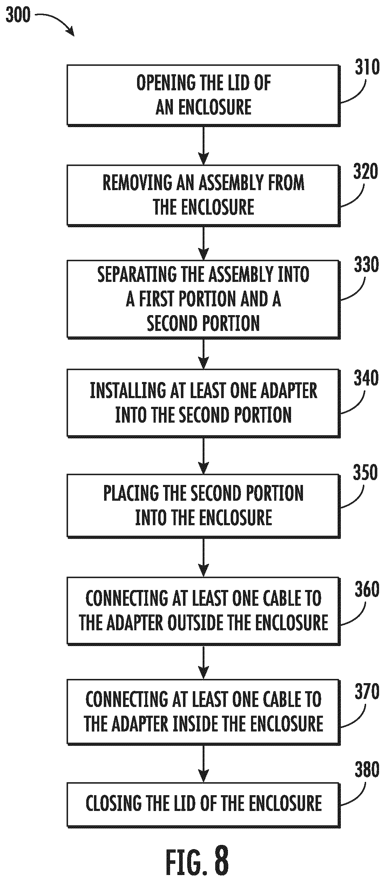

FIG. 8 is a flowchart illustrating an example method 300 of installing optical fiber/cabling into an enclosure, in accordance with some embodiments discussed herein. At operation 310, the lid 101 of the enclosure 100 is opened. At operation 320, the assembly (e.g., apparatus 140) is removed from the enclosure 100. At operation 330, the assembly (e.g., apparatus 140) is separated into a first portion 142 and a second portion 150. At operation 340, an adapter 160 is installed into the second portion 150. At operation 350, the second portion 150, with the adapter 160, is positioned back into the enclosure 100 with the second portion 150 facing external to the enclosure 100. At operation 360, at least one optical fiber/cable is connected to the adapter 160 outside the enclosure 100. At operation 370, at least one optical fiber/cable is connected to the adapter 160 inside the enclosure 100. At operation 380, the lid 101 of the enclosure 100 is closed.

### Conclusion

Many modifications and other embodiments of the inventions set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. An apparatus for use in connection with an enclosure defining a receiving opening for one or more cables to enter the enclosure, the apparatus comprising:
a housing comprising a first portion and a second portion coupled at a base,
wherein the first portion comprises a closed surface extending between a first edge and a second edge,
wherein the second portion comprises at least one opening extending between a third edge and a fourth edge,
wherein each of the first edge, the second edge, the third edge, and the fourth edge define an edge profile; and
an insert positioned between the first portion and the second portion, wherein the insert defines a cut leading from a first side to a second side of the insert for receiving a cable therethrough, wherein the edge profile is configured to provide selective coupling within the receiving opening of the enclosure such that one of the closed surface, the at least one opening, or the first side or the second side of the insert faces outwardly from the enclosure.

2. The apparatus of claim 1, wherein the housing defines rotational symmetry among the edge profiles of the first edge, the second edge, the third edge, and the fourth edge.

3. The apparatus of claim 2, wherein the rotational symmetry allows the apparatus to be removed from the opening, rotated in increments of 90-degree and replaced within the opening of the enclosure .

4. The apparatus of any of claims 1-3, wherein the second portion is configured to receive at least one adapter within the at least one opening.

5. The apparatus of any of claims 1-4, wherein the second portion comprises at least one rung, wherein the at least one rung partially bounds the at least one opening.

6. The apparatus of any of claims 1-5, wherein the base comprises a fracture line extending between the first portion and the second portion.

7. The apparatus of any of claims 1-6, wherein the at least one opening comprises three openings, wherein each of the three openings are configured to receive an adapter for connecting one or more cables.

8. The apparatus of any of claims 1-7, wherein the insert comprises one or more circular indicators for indicating a positional placement for a cable.

9. The apparatus of any of claims 1-8, wherein the insert is an elastic foam.

10. A system for cable management, the system comprising:
an enclosure defining a base portion comprising a first wall, a second wall, a third wall, and a fourth wall, wherein at least one of the first wall, the second wall, the third wall, or the fourth wall define at least one receiving opening for providing access for one or more cables to enter the enclosure, wherein the receiving opening comprises at least a first rail and a second rail; and
an apparatus removably engageable with the first rail and the second rail of any of claims 1-9.

11. The system of claim 10, wherein the at least one receiving opening defines a first engagement area, a second engagement area, a third engagement area, and a fourth engagement area, and wherein in a first position the first edge engages the first engagement area, the second edge engages the second engagement area, the third edge engages the third engagement area, and the fourth edge engages the fourth engagement are.

12. The system of claim 11, wherein each of the first edge, the second edge, the third edge, and the fourth edge, are engageable with each of the first engagement area, the second engagement area, the third engagement area, and the fourth engagement area.

13. The system of any of claims 11-12, wherein the housing of the apparatus defines rotational symmetry among the edge profiles of the first edge, the second edge, the third edge, and the fourth edge, such that the apparatus is removable from the receiving opening in the first position and rotatable in 90-degree increments, such that the first edge engages with one of the first engagement area, the second engagement area, the third engagement area or the fourth engagement area, the second edge engages with one of the first engagement area, the second engagement area, the third engagement area or the fourth engagement area, the third edge engages with one of the first engagement area, the second engagement area, the third engagement area or the fourth engagement area, and the fourth edge engages with one of the first engagement area, the second engagement area, the third engagement area or the fourth engagement area.

14. The system of any of claims 10-13, wherein the first rail and the second rail define a geometric profile which is complimentary with each edge profile of the first edge, the second edge, the third edge, and the fourth edge.

15. The system of claim 14, wherein each of the geometric profile and the edge profiles are formed of right angles.
